# EUROPEAN PATENT APPLICATION

(11) **EP 2 733 812 A2**
(43) Date of publication of application: **21.05.2014**
(21) Application number: 13180692.9
(22) Date of filing: 16.08.2013
(51) Int. Cl.: H02J 3/32, H02J 3/38, H02J 7/34

(54) **Method of controlling a power plant**

(30) Priority: 16.11.2012 US 201213678786
(71) Applicant: Siemens Aktiengesellschaft, 80333 München (DE)
(72) Inventor: Nielsen, Kaj Skov, Issaquah, 98027 (US); Stoettrup, Michael, 7400 Herning (DK)

(57) **Abstract**

A method of controlling a power plant connected at a point of connection to an electricity grid is provided. The power plant includes a renewable power production facility connected to a power storage facility. The method includes determining an active power grid demand of the electricity grid, obtaining operating data for the renewable power production facility and the power storage facility, determining, on the basis of the grid demand and the operating data, active power transfer quantities to be transferred between the renewable power production facility and the power storage facility and/or from the power plant facility to the grid, computing active power references for the facility of the power plant on the basis of the active power transfer quantities, and operating the power plant facility on the basis of the active power references. Further, a plant controller for controlling such a power plant and a power plant are provided.

## Description

### FIELD OF INVENTION

A method of controlling a power plant, a power plant controller and a power plant are provided.

### BACKGROUND OF INVENTION

A grid operator or balancing authority may determine the base amount of active power that power producing facilities such as fossil plants, hydro plants or wind power plants may be allowed to produce at any specific time, i.e. the amount of power required by customers supplied by the grid, and issue appropriate references to any power plant that feeds into the grid. Such power plants are generally characterized by their ability to regulate the real or active power within some dynamic range depending on various factors such as environmental conditions, the number of power production units up and running, the type of technology used by the power plant, etc. The active power response rate and the reactive power response rate of a power plant also depend on the plant type. The proportions of active power and reactive power that are required from the power plants may vary according to the load on the grid and the grid voltage. Power producing plants can increase or decrease their power output as necessary and can respond to the momentary demand situation. In the case of power production plants that produce or generate electricity using renewable energy sources such as wind energy or solar energy, the amount of power that can be output depends to some degree on the environmental situation, for example the strength of the wind in the case of a wind power plant; or the time of day and extent of cloud cover in the case of a photovoltaic power plant.

The amount of power generated by a power production facility is regulated or managed by a plant operator, which ensures that the power fed from a power plant into the grid fulfils the grid requirements at all times. A power plant operator of a renewable power plant, for example the "pilot" of a wind farm, is effectively separate and isolated from any energy storage facility managed by the grid operator. The functional separation between the wind farm operator and the grid operator means that the grid operator does not have any information regarding internal processes of the wind farm, while the wind farm is only able to react to a grid demand after this has been made known. This can lead to situations in which it is difficult for a renewable power plant to reach grid compliance without "spilling" energy. A power plant "spills" energy whenever it is capable of delivering more power than it is permitted to feed into the grid, i.e. it is prevented from operating to its full potential. For example, a wind power plant may be compelled to curtail its production in response to a high frequency situation on the grid. Another such situation might arise when a renewable plant is operated for extended periods of time at a de-rated grid power reference in order to be able to deliver fast frequency response in the event of a sudden grid frequency drop. At present, these and similar situations often result in renewable power plants such as wind power plants having to "spill", i.e. waste, valuable energy.

Another drawback of the established power networks is that only the grid operator can make use of a power storage facility in which a power "surplus" on the grid could be converted into a form suitable for storage and for later retrieval, for example for delivering energy back into the grid.

### SUMMARY OF INVENTION

It is therefore an object to provide an improved way of operating a power plant that comprises both renewable power production plants and power storage plants. This object is achieved by the method of controlling a power plant, by the plant controller and by a power plant as claimed in the claims.

The method of controlling a power plant - connected at a point of connection to an electricity grid and comprising at least one renewable power production facility connected to at least one power storage facility - comprises the steps of determining an active power grid demand of the electricity grid; obtaining operating data for the renewable power production facilities and for the power storage facilities; determining, on the basis of the grid demand and the operating data, an active power transfer quantity to be transferred between a renewable power production facility of the power plant and a power storage facility of the power plant; and/or from a power production facility of the power plant to the grid; computing active power references for the facilities of the power plant on the basis of the active power transfer quantities; and operating the power plant facilities on the basis of the active power references.

The power storage facilities are connected to the power production facilities of the power plant, which is to be understood to mean that energy output by a power production facility can be transferred in some manner to one or more of the power storage facilities. Energy transfer could take place over the electricity grid. Preferably, however, a power storage facility of the power plant may be directly fed by a power production facility, effectively bypassing the electricity grid.

An advantage of the method is that not only renewable power production facilities but also power storage facilities can be collectively controlled so that the potential of each facility to contribute to an active or "real" power grid requirement can be fully exploited. The method makes it possible for an operator of one or more renewable power plants to provide a steady power input to the grid, even during unfavorable environmental conditions for a renewable power plant. As will be explained below, the combined control of storage facilities and power production facilities allows the power plant to provide (in addition to its function as a supplier of power) a number of important ancillary services such as power system stabilizing function in the short-term, a frequency response or inertial response in the short-time, a power oscillation smoothing function over a slightly longer time scale, and peak demand function in an-inter day or inter-week time scale, or seasonal load matching on a very long time scale.

With the method, the management of power storage facilities is no longer carried out in isolation from the power production facilities, so that these facilities may now be operated to compensate for constraints placed on the power production facilities by the currently applicable grid demand, thereby allowing an optimal utilization of their capabilities. The method allows the power plant to deliver ancillary services while at the same time reducing energy spillage, in addition to fulfilling any energy requirements.

The plant controller - for controlling a power plant connected to an electricity grid at a point of connection and comprising at least one renewable power production facility connected to at least one power storage facility - comprises an input means for determining an active power grid demand of the electricity grid; a data collection means for obtaining operating data of the renewable power production facilities and of the power storage facilities; a transfer quantity determination module for determining, on the basis of the grid demand and the operating data, an active power transfer quantity to be transferred between a renewable power production facility of the power plant and a power storage facility of the power plant; and/or from a power production facility of the power plant to the grid; a reference computation module for computing active power references for the power plant facilities on the basis of the active power transfer quantities; and a distribution unit for distributing the references to the power plant facilities such that the power facilities operate to fulfill grid demands at the point of connection.

Since the plant controller is essentially between the utility grid and the power facilities of the power plant, the power plant may be regarded as a single entity that feeds power into the grid. An advantage of the plant controller is that control of the power storage facilities and control of the power production facilities can be combined in such a way that each of these facilities can contribute, according to its capability, to the active power at the grid connection point or "point of common connection", usually abbreviated as PCC. This also allows the power storage facilities and power production facilities to be used at all times to their optimum capacity, and makes it possible for the operator of a renewable power plant to provide a steady power input to the grid, even during environmental conditions that are unfavorable for a renewable power plant. The combined control of storage and power production facilities allows a more accurate ramping regulation with less energy spillage compared to the known systems in which storage and production facilities must be operated and controlled independently. The plant controller may therefore exploit different capabilities of various combinations of storage technologies to calculate optimal active power references for power production facilities and power storage facilities so that the power plant is grid compliant, while at the same time being able to deliver a favorable combination of services, such as ancillary services, and while ensuring minimal energy spillage.

The power plant comprises at least one renewable power production facility connected to at least one of power storage facility, and the power plant is realized for connection to an electricity grid at a point of connection and comprises a plant controller for controlling the power plant using the method.

An advantage of the power plant is that it can control any number of power production facilities and any number of power storage facilities, while these power facilities can be of any appropriate type or nature. The different or varying production capabilities of power production facilities can be optimally combined with the different or varying storage capabilities of power storage facilities at any one instant, while always satisfying an active or "real" power requirement of the grid at the power plant's point of connection to the grid.

Particularly advantageous embodiments and features are given by the dependent claims, as revealed in the following description. Features of different claim categories may be combined as appropriate to give further embodiments not described herein.

The arrangement of interconnected power production facilities and power storage facilities are to be understood to collectively comprise a "power plant". As indicated above, for geographically separate power facilities, energy transfer between a power production facility and a power storage facility of the power plant can take place over a grid, so that the power plant can be regarded as a "distributed plant" or a "virtual" plant. Even if the facilities are geographically remote from each other, they can be collectively controlled by the plant controller. Therefore, in the following but without restricting the invention in any way, the terms "power plant", "virtual power plant", "collective power plant", "combined power plant" and "aggregate power plant" can have the same meaning and may be used interchangeably. The power plant is seen as a single entity by the grid. Connection points of the facilities of the power plant to the grid can be collectively regarded as a single point of connection, which can also be referred to as a "virtual", "combined" or "aggregate" point of connection. In a preferred embodiment, the power production and storage facilities can be relatively close to each other geographically and preferably feed into the grid at one point of common connection.

A power production facility is typically used to generate power that is fed into the electricity grid for consumption. In this context, some of the generated power can be transferred - as required - to a power storage facility. Therefore, in the following, but without restricting the invention in any way, the term "power facility" can refer to a power production facility or a power storage facility.

A "facility" can comprise a single unit or it may comprise a number of units. For example, a power production facility such as a wind park can comprise any number of power generating units, in this case wind turbines. In the following, again without restricting the invention in any way, the terms "power generating unit" and "turbine" may be used interchangeably. Equally, a power storage facility can comprise a plurality of storage units, for example a battery storage plant comprising a bank of accumulators or batteries controlled by a common controller. Each facility of the power park may have its own local controller.

The power plant controller can directly manage a power facility by generating references for a controller of that power facility, for example for the "park pilot" in the case of a wind park. In this case, the power plant controller preferably communicates with the park pilot, which in turn distributes the references to the individual units of the wind park.

In a power plant, a renewable power production facility can comprise any of the group of power production facilities comprising a wind power plant; a tidal power plant; a solar power plant, or any other type of renewable power production facility that is capable of producing energy that can be fed into an electricity grid and/or converted for storage in a power storage plant of the power plant. Of course, the power plant could also, in addition, comprise conventional (i.e. not "renewable") power production facilities.

Similarly, in a power plant, a power storage facility can comprise any of the group of reversible power storage facilities comprising a thermal storage facility; a battery storage facility; a flywheel storage facility; a compressed air storage facility; or any other type of power storage facility that is capable of converting electrical energy and storing it in a form from which it can later be retrieved again as electrical energy. Preferably, a power storage facility is a reversible power storage facility that can provide active power when required, for example a battery that can be charged using an electrical current, and which outputs an electrical current when discharged. Another example might be a hydro-electric facility, for which electrical energy is used to pump water into a reservoir, and which outputs electricity again when the stored water is used to drive a turbine. Of course, the power plant could also, in addition, comprise one or more non-reversible power storage facilities that output energy in a different form, for example a synthetic natural gas facility, for which electrical energy is used to synthesize gas. The gas can be supplied directly by consumers without undergoing any further conversion. Such a non-reversible storage facility could be used to absorb surplus energy whenever the reversible storage facilities are full to capacity.

The ability to provide ancillary services - in addition to simply providing power to the grid - is becoming more relevant in some power markets. The method of controlling the power plant allows it to provide a wide range of such services. For example, inertial response can be offered as a service to the grid operator. From the point of view of the power plant, this can, for example, involve reducing the power output supplied by a wind power plant to this grid, while any excess power is "parked" in a storage facility and not spilled. Similarly, inertial response can be provided by retrieving a portion of the required power from a storage facility, and making up the rest using the power from the production facilities. Power generating units of these power production facilities are therefore protected from having to provide the demanded power "peak". In this way, exposure of turbines to peak loads exceeding a nominal power value is reduced. The method makes use of the fact that renewable power plants such as wind parks based on turbines can supply inertial response within a very short time (an example of inertial response might be to deliver 5% of power in 1 second, for a duration of 10 seconds), and combines this with the possibility of augmenting the turbines power output with stored power, so that the power plant can satisfy the peak demand while ensuring that the turbines are subject to less wear.

Furthermore, by collectively controlling power storage and power production facilities in a single power plant, the length of time over which spinning reserve can be offered as an ancillary service - without having to spill power - can be greatly extended. Spinning reserve is the difference between the available power (i.e. the maximum that a power plant can deliver) and the actual power (i.e. what the power plant is in fact delivering). Spinning reserve is an ancillary service that some utilities like to have, since it gives them the ability to regulate up at short notice. For example, a gas turbine can be operated to run at 75% of nominal, so that it can ramp up to 100% at short notice. Such a service can be sold to the grid operator. It is possible for a renewable power plant such as a wind power plant to deliver such a service more efficiently.

Also, the collective control of the facilities of a power plant allows power production units such as turbines to ramp down over a longer period of time, while at the same time gradually increasing a level of storage, so that the power output into the grid at plant level appears as a fast ramp. The actual "gentle ramp" at the turbine level can favorably extend the lifetime of the turbine, since it means that the turbine is subject to less wear. Similarly, the gradual increase in power import at the storage facility is also associated with less wear on components of the storage facility.

Preferably, the facilities of the power plant according to the network are connected to the plant controller over a suitable communications network. Such a connection allows controllers of spatially separate facilities to exchange data, for example storage capacities of storage facilities, which data can be used in determining the references or setpoints for the power facilities, as will be explained below.

The reference computation unit of the plant controller preferably generates references that are tailored to the capabilities of the power facilities. Therefore, in a particularly preferred embodiment, the step of obtaining operating data of a power plant facility comprises obtaining up-to-date or momentary data indicating or quantifying the power output by a renewable power production facility, as well as up-to-date or momentary data indicating or quantifying the storage capacity of a power storage facility. For example, the power production facilities of a wind park can report any or all of a momentary available active power output, a momentary active power output, available inertial response magnitude and duration, demand response capability, up-ramping capability, down-ramping capability, power system stabilizer capability, etc. Theses values can reflect the performance of the wind park as it operates according to the reference that it most recently received and that is still applicable. Similar information can be obtained from the energy storage units of the power plant, which can report any of all of momentary available active power output, a momentary active power output, available power export, available power import, short term import/export surge, up-ramping capability, down-ramping capability, power system stabilizer capability, etc.

To use this data optimally or most efficiently, the reference computation module also preferably determines the aggregate momentary situation at the power plant's point of connection to the grid. Therefore, in a further preferred embodiment, the step of obtaining operating data of the power plant facilities comprises measuring net power at the point of connection of power plant to the electricity grid. Knowing the value of a net or aggregate variable, and knowing the individual contributions and potential of each power facility, the reference computation unit can compute individual references for each power facility to obtain a desired aggregate value, while exploiting the potential of each power facility and spilling as little energy as possible. By taking advantage of the stored energy in the storage facility when such energy is available, and by storing short-term power surpluses when grid variations or ramping restrictions demand reduced power delivery, makes the combined plant more efficient.

The power output of a renewable power plant such as a wind park may be subject to significant fluctuations, so that, at times, a wind park could produce more power than actually required by the grid. However, a power storage facility will generally have a maximum capacity, i.e. a finite or limited capacity to store energy. Therefore, in a preferred embodiment, an active power reference for a power storage facility is computed to transfer a quantity of its stored power to the grid when the power stored in the power storage facility reaches or exceeds an upper threshold. In this way, a certain amount of "free space" can always be reserved for situations in which a facility such as a wind park could deliver more power than it can feed into the grid. The power storage facility can be completely or partially depleted at appropriate times, for example during low wind conditions when a wind park cannot deliver much power to the grid, or overcast conditions or during the night, when a solar power plant cannot deliver much or any power to the grid.

A grid controller may issue a command or request to a power plant to increase its output, i.e. to ramp up its output. Generally, the output should be increased over a specific duration and at a specific rate. Using the method, the transfer quantity determination module determines how much active power can be delivered by the renewable power production facilities of the power plant directly to the grid, and how much active power needs to be transferred from one or more power storage facilities in order to "make good" any deficit of the renewable power production facilities of the power plant. Appropriate active power references are computed or calculated by the reference computation module and distributed to the power plant facilities. Therefore, the method makes it possible for a power plant comprising renewable power facilities to ramp up its power output at the rate specified by the grid controller with reduced energy spillage from the renewable plant.

Similarly, a grid controller may issue a command or request to a power plant to reduce its output, i.e. to ramp down its output. During the ramp-down phase, the power output to the grid should reduce at a steady rate over a specific duration. In prior art control methods for renewable power plants, the power production units might have to be controlled to produce less power than they could during and after such a ramp-down phase, so that power is effectively wasted or spilled (by not producing it in the first place). Therefore, in a further preferred embodiment, active power references are computed to transfer quantities of power from the renewable power plants to the storage facilities when ramping down, so that a ramp-down limit is complied with. In this way, any excess or surplus power exceeding the momentary ramp-down value can be efficiently "parked" in the storage facilities, so that the renewable power plants simply continue to produce active power even though the output to the grid is being ramped down. As time progresses during the ramp-down phase, the amount of power that is being transferred to the storage facilities can increase steadily. Preferably, short-term fast-response storage facilities such as battery storage units are "filled" first, and any excess power thereafter could be used to drive or charge other facilities such as a synthetic natural gas facility.

The grid demand can change at relatively short notice, depending on various factors such as time of day, etc. However, a renewable power production facility may not always be able to simply increase its output on demand. For example, during low wind conditions, a wind park may not be able to increase its power output. Similarly, during overcast or cloudy conditions, a photovoltaic park may not be able to respond to an increase in grid demand. Therefore, in a further preferred embodiment, an active power reference for a power storage facility is computed to transfer a quantity of its stored power to the grid when a grid active power demand is increased. In this way, any available power stored in a reversible power storage facility can be "tapped" to make good the power deficit. Similarly, an active power reference for a power storage facility is preferably computed to transfer a quantity of its stored power to the grid when a grid frequency is lower than a grid frequency requirement, when the renewable power production facilities are unable to deliver more power, or when a storage facility could deliver active power to reduce mechanical load or wear on a power production facility.

In order to be able to provide such a response to a power deficit at the power plant's point of connection to the grid, the method preferably manages the facilities accordingly. Therefore, in a further preferred embodiment, an active power reference for a power storage facility is computed to transfer active power from a renewable power production facility of the power plant to the power storage facility when the level of power stored in the power storage facility is less than a lower threshold. For example, whenever the power production facilities are able to produce more power than need be fed into the grid, some or all of this excess power can be used to ensure that a minimum level of power is stored in each power storage facility. The active power references could also be computed so that storage of a minimum power level is given preference over the power output to the grid in order to be able to extend the delivery of ancillary services to the grid provider. In a preferred embodiment, a power plant could be contracted to deliver active power and a fixed level of spinning reserve, for example 25 MW (i.e. a ramp-up capability of 25 MW). For a power plant comprising a wind park and a storage battery for which, the battery storage level is low, this ramp-up capability might only be achieved by, for example, de-rating the wind power plant reference by 25 MW. As the storage level is gradually increased while the battery is being charged, the amount by which the wind power plant power reference is de-rated can gradually be reduced, thereby ensuring that the combined capability of the storage and the production plant remains essentially constant at 25 MW. In such a situation, therefore, the spinning reserve of the power production facility is preferably reduced on the basis of the stored power level.

As indicated above, transmission systems may be limited or constrained in their ability to respond to changes in environmental conditions. For example, the power output of a wind turbine may increase at a faster rate than the transmission system can absorb. This can be a problem for a conventionally operated renewable power plant that is operated with a "tight" power ramp rate restriction. Therefore, in a further preferred embodiment, the active power reference of a storage facility is adjusted dynamically. For example, the charge or discharge level of a storage facility can be adjusted dynamically, based on the changes in wind conditions, thus storing energy from wind gusts rather than spilling the energy contained in them. By combining the controls for the storage facilities and the power production facilities in this manner, the wind power plant can achieve a well-defined ramp with minimal spillage of wind, compared to a conventionally operated power plant such as a wind plant that is set up to reach the same ramp rate targets. The power plant can therefore provide favorable improvements in the overall grid stability.

A power grid dominated by conventional power production facilities like coal or nuclear plants can experience power system oscillations. A renewable power plant with large power electronic converters can output power that helps to cancel out or to smooth such oscillations by delivering power that fluctuates to a corresponding amplitude but with a phase offset from the natural oscillation of the grid. Therefore, in a further preferred embodiment, quantities of power can be transferred to or from one or more power facilities of the power plant to deliberately cause a controlled oscillation of the output of the power plant.

Similarly, in a further preferred embodiment, quantities of power can be transferred to or from one or more power storage facilities of the power plant to compensate for an oscillation of the output of one or more renewable power production facilities of the power plant. Any "peaks" or "troughs" in the renewable power plants' output can thus be smoothened by parking or retrieving power from one or more suitable short-term fast-response power storage plants.

In this way, any reserves of power stored in the power storage facilities can be tapped as required to make up for an uneven power system output, and any storage capacity can be exploited to "park" even small quantities of excess power. By combining the controls for storage and power production facilities in this way, the power plant can offer grid stabilization as an ancillary service, without spilling power from the wind turbines.

In another preferred embodiment, fast-acting under-frequency response or inertial response can be provided by temporarily increasing the power delivery from one or more storage facilities, thus increasing the level of actual power produced, by allowing a short-term equipment overload. This does away with the need to operate a power plant at a pre-reduced power level associated with an energy spilling. For example, if there is little or no wind, inertial response can be supplied as a combination of storage power combined with short-term wind turbine demand reductions. In this way, the combined or collective response to the grid demand is optimized to reach the desired or required level of inertial response for the given conditions, instead of controlling the wind turbines in an isolated manner, which is the case for conventional power plants. In the method, the magnitude of each facility's individual contribution to the collective inertial response can be dynamically balanced between storage facilities and production facilities, so that energy spill and mechanical stress associated with inertial response can be very favorably minimized.

Since the potential of a renewable power production facility can depend on many factors, the reference computation unit preferably takes into account any variable, parameter or constraint that can provide information about the potential of such a renewable power facility. For example, the capacity of a wind park to produce active power and/or deliver ancillary services may be estimated for the near future on the basis of one or more of the non-exhaustive set of forecast variables such as weather forecast, production forecast, power price forecast, etc. Similarly, the capacity of a reversible power storage facility may be estimated using one or more variables such as storage cycle cost and knowledge about its storage cycle history. By making use of such wind or energy forecasts, a plant controller can fully exploit the potential of the facilities to enable power delivery shifting on the scale of days, weeks or even months.

Generally, a power production facility is realized and controlled to avoid transients in the case of a sudden increase or decrease on the load at the output. Power plants are designed to respond to frequency variations with a pre-defined frequency droop. Therefore, in a further preferred embodiment, the step of controlling the power facilities is implemented according to a combined droop of the power facilities at the point of common connection and/or according to a local droop of a power facility. In this way, the power facilities can collectively operate on a desired frequency droop curve with a minimum energy spill and/or a reduced mechanical load on production facilities when these respond to a frequency event.

The step of computing active power references for the power plant facilities on the basis of the grid demands and the operating data amounts to determining a "facility contribution plan" for the operation of the power plant facilities, i.e. a set of the individual contributions that are to be made by each facility in satisfying the grid demand, storing excess power, responding to a critical situation, etc. Such a facility contribution plan takes into account the grid demand that must be satisfied as well as the potential or capacity of each of the facilities of the power plant.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

Fig. 1 shows a power plant controller and a power plant according to an embodiment.

Fig. 2 shows a flowchart for the method.

Fig. 3 shows a prior art arrangement of power facilities connected to an electricity grid.

Fig. 4 is a symbolic representation of a power storage facility for use in a power plant according to an embodiment.

Fig. 5 shows a graph of some power transfer situations arising during operation of a power plant using the method according to an embodiment.

In the diagrams, like numbers refer to like objects throughout. Objects in the diagrams are not necessarily drawn to scale.

### DETAILED DESCRIPTION OF INVENTION

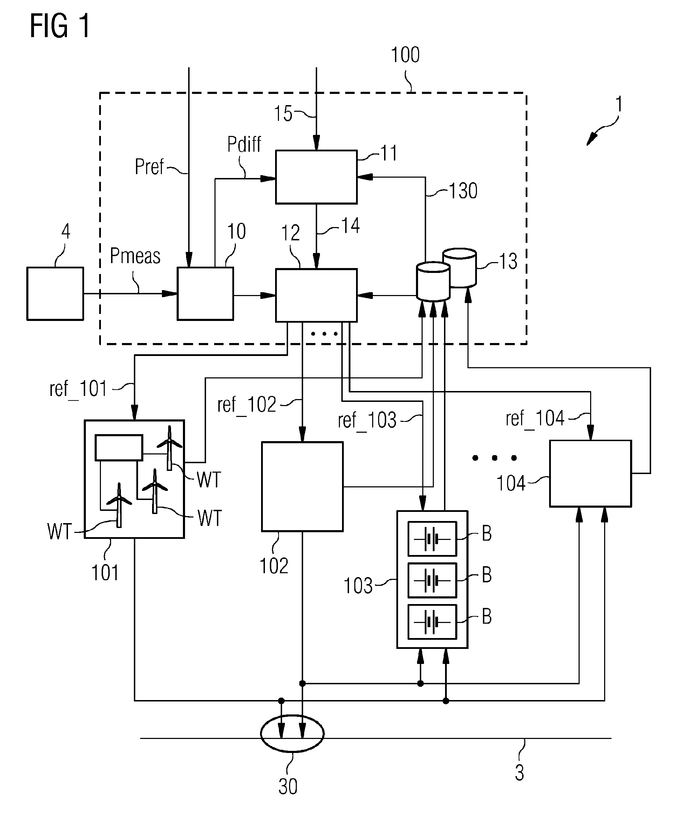

Fig. 1 shows a functional block diagram of a power plant controller 100 in a power plant 1 according to an embodiment. The power plant controller 100 can control a plurality of power facilities 101, 102, 103, 104. Here, the power facilities comprise a first wind park 101 with a number of wind turbines WT, a second renewable power production facility 102, a power storage facility 103 such as a battery or hydroelectric station, and another power storage facility 104. Of course, the power plant 1 can comprise any number of renewable power production facilities and any number of power storage facilities, any combination of power production and power storage facilities, and is not limited to the types mentioned here. In this embodiment, the power production facilities 101, 102 and power storage facilities 103, 104 are interconnected, i.e. power can be transferred between these facilities independently of the grid 3, indicated by the arrows. Of course, although not shown here, the power storage facilities 103, 104 could also be charged using power from the grid 3. The power production facilities 101, 102 are shown to feed into the grid 3 at a point of connection 30, indicated only schematically here.

The plant controller 100 is supplied with various types of information: The grid active power demand Pref is supplied by a grid or plant operator 4. This is the desired active power output of the plant 1, i.e. the active power that is to be measured at a point of connection 30 to the grid 3. The momentary measured value Pmeas at the point of connection 30 is also provided. The difference Pdiff between the desired and actual values is computed in a control unit 10.

A data collection unit 13 collects relevant momentary performance data 130 from each of the facilities 101, 102, 103, 104 such as the storage capacity of a storage facility 103, 104, available power stored in a storage facility 103, 104, the momentary power output of each power production unit WT of a wind farm 101, the number of operational power production units WT, etc.

A computation module 11 receives the momentary performance data 130, the difference value Pdiff, and may also receive any other relevant parameters 15 such as storage lifetime and cost, production cost, weather forecast, etc. The performance data 130 can comprise values that quantify available power production, actual power production, available storage power import export, level of charge, ramping capability, available under frequency response, inertial response, power system stabilizer capability, ramping capability up/down, etc.

With this information, the computation module 11 calculates the quantities of active power that could be transferred between the facilities of the power plant, i.e. the contribution that each facility 101, 102, 103, 104 can make towards fulfilling the grid requirement and/or exploiting the power production capabilities of the power plant. This information is forwarded as a facility contribution plant to a distribution unit 12 to compute active power references ref_101, ref_102, ref_103, ref_104 for each of the facilities 101, 102, 103, 104. In the case of a power production facility such as a wind park 101, a park pilot can distribute or divide its reference ref_101 among the turbines WT of the wind park by computing individual references for the turbines WT, making use of knowledge specific to that wind park 101, for example the placement of each turbine WT in the wind park, the average wind speed measured at each turbine WT, etc. Similarly, a power storage facility 103 could comprise a plurality of storage devices B such as batteries B, and a facility controller could convert the input reference ref_103 to individual references for each of the storage devices B.

By computing the references ref_101, ref_102, ref_103, ref_104 in consideration of all relevant input information in this manner, the grid requirements can be met at the point of connection 30 for the power plant 1, while at the same time an optimal operation of each facility 101, 102, 103, 104 is ensured and a minimum of energy is spilled by the wind power plant.

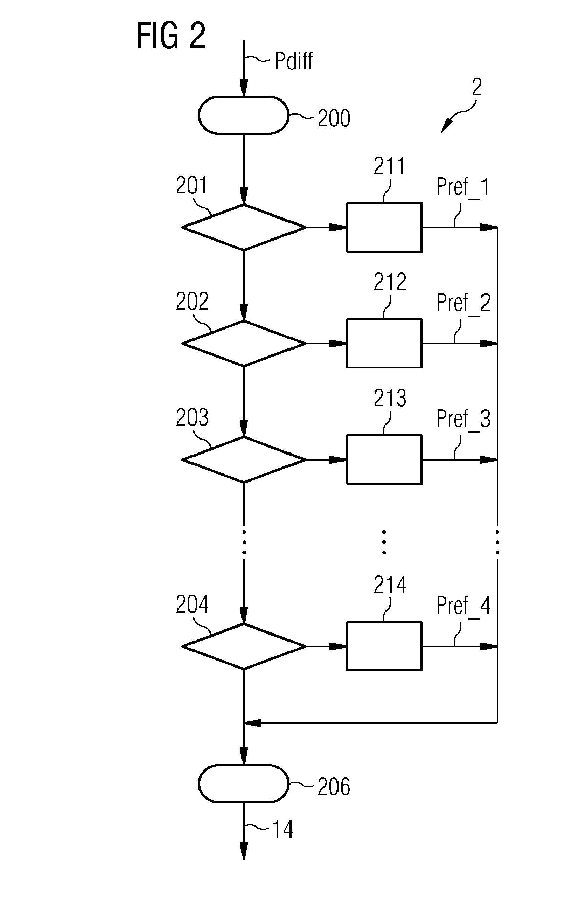

Fig. 2 shows a simplified process flowchart 2 for the method steps, indicating steps that can be carried out to determine power references for the facilities of the power plant, for example in the computation module 11. In this embodiment, an initial step 200 is provided with a power reference Pdiff, e.g. the quantity of active power that is required, based on the grid demand and the momentary power measured at a point of connection. This power reference can be modified according to the outcome of a number of decision steps 201, 202, 203, ..., 204 as follows: In a first decision step 201, an inquiry is made as to whether a first ancillary service is to be provided. If "yes", the power reference is modified by a corresponding amount in a first computation step 211 to give a modified power reference Pref_1; otherwise, the power reference remains unchanged and is forwarded to a second decision step 202, where another inquiry is made as to whether a second ancillary service is to be provided. If "yes", the power reference is modified in a second computation step 212 by a corresponding amount to give a modified power reference Pref_2; otherwise, the power reference remains unchanged, etc. After working through all possible decision steps, the unchanged power reference Pdiff or a modified power reference Pref_1, Pref_2, Pref_3, Pref_4 arrives at a terminating step. This power reference is then distributed among the facilities of the power plant. The diagram only shows four decision steps 201, 202, 203, ..., 204 and four computation steps 211, 212, 213, ..., 214, but it should be understood that any number or combination of decision steps and computation steps could be used in a process flowchart, as indicated by the dots.

In the preceding simplified example, one of a number of ancillary services is provided, and the decision steps 201, 202, 203, ..., 204 are arranged in decreasing order of priority, with the decision step 201 of the highest priority service in first place. Of course, the process flowchart might permit several ancillary services to be provided simultaneously. To this end, a modified power reference calculated in a computation step could be used as input to a subsequent decision step. In such an embodiment, the decision steps can also be arranged in a specific order of priority, so that ancillary services with high priority are considered first. The priorities of the ancillary services in the decision process may depend on the local requirements or regulations.

For example, if inertial response is required, the active power reference is corrected by the appropriate value; if frequency response is required, the active power reference is further adjusted. If ramping restrictions are required, further adjustments can be made to the active power reference. If spinning reserve or power system stabilizer services are bid into the market, further adjustment to the active power reference may be made. If transmission constraints are active, this constraint can be applied to the active power reference. The end result is a facility contribution 14 plan with an active power reference that results in the desired active power delivery to the grid from the virtual plant of Fig. 1, whether it is delivered by the production facilities 101, 102 alone or by a combination of the production facilities 101, 102 and storage facilities 103, 104; or whether any excess power is stored in the storage facilities 103, 104. Using the facility contribution 14 plan, active power transfer quantities in the form of individual references ref_101, ref_102, ref_103, ref_104 for each facility 101, 102, 103, 104 are then calculated in the distribution unit 12 of the plant controller 100, and distributed to the facilities 101, 102, 104 of the power plant 1, as indicated in Fig. 1 above.

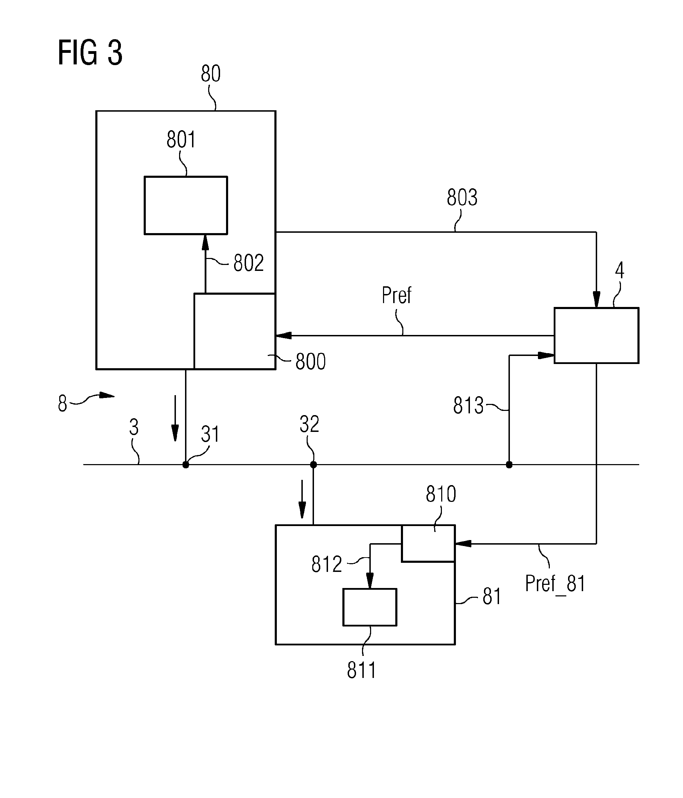

Fig. 3 shows a prior art arrangement of a power network 8 comprising a power production plant 80 such as a wind park 80 and a power storage plant 81 connected to an electricity grid 3 at independent points of connection 31, 32. A grid controller 4 monitors the situation on the grid 3 and informs the power production plant of the required grid active power Pref. The power production plant 80 comprises a plant controller 800 that converts the supplied grid demand value Pref into a suitable reference 802 to control the output of a power production facility 801. The power production plant 80 feeds power into the grid 3 according to the extent that it is capable of fulfilling its grid demand Pref. A power storage facility 81 such as a hydro-electric station 81 can use excess electric power from the grid 3 to pump water into a reservoir. In order to be able to transfer active power (to store an excess or make up for a deficit), the power plants 80, 81 provide the grid controller 4 with information 803, 813 regarding their current situation. The grid controller may then decide to transfer some power from the grid 3 to store it in the power storage facility 81, by issuing an appropriate reference Pref_81 to the power storage plant 81.

However, because they are not controlled collectively, the power plants 80, 81 have to manage certain situations independently, for example frequency response, inertial response, etc. resulting in the wind power plant 80 sometimes spilling power in order to deliver this ancillary service. Similarly if the plants 80, 81 each bid on spinning reserve as an ancillary service, the storage plant 81 can only offer spinning reserve when its battery has a significant level of charge, and the wind power plant can only offer spinning reserve when a sufficiently strong wind is forecast. Similarly, if the plants 80, 81 bid on power system stabilizer services, this can easily result in energy spillage at the wind power plant 80. Also, if the plants 80, 81 must fulfill a fast ramp down requirement, the turbines of the wind park 80 are subject to stress, since the wind park 80 is compelled to fulfill this requirement regardless of the load on its turbines. The independent control of such plants 80, 81 is therefore associated with a larger spillage of energy from the renewable plant 80, a bigger stress on the renewable power plant 80 under certain conditions, and a limited ability to deliver ancillary services under some weather conditions. This may result in the power plants 80, 81 of that power network being excluded from some ancillary service markets.

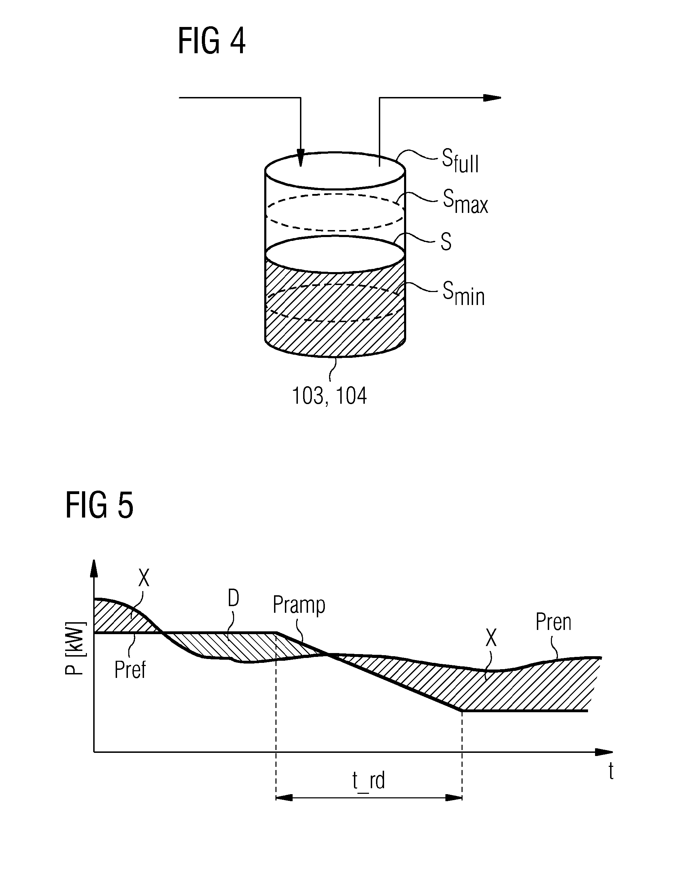

Fig. 4 shows a symbolic representation of a power storage facility 103, 104 or a unit of a power storage facility 103, 104 for use in a power plant. The facility contribution plan for the method will aim to store at least a minimum quantity Smin of energy, so that the storage facility 103, 104 can always "top up" a power production deficit at least for a certain period of time. Similarly, during "normal" operation of the power plant, the method will aim to leave some free capacity, indicated by the level Smax that is less than the total capacity Sfull of the storage facility 103, 104. The actual level or quantity S of stored energy is made known to the plant controller, along with the other parameters Smin, Smax and Sfull, so that the plant controller can use this information to decide whether excess power can be stored in the storage facility 103, 104 and how much (indicated by the inward-pointing arrow), or whether stored power can be retrieved from the storage facility 103, 104 and how much (indicated by the outward-pointing arrow).

Fig. 5 shows a very simplified graph of power [kW] against time [t] indicating some power transfer situations that might arise in a power plant. The graph Pren shows the fluctuating output of a renewable power plant. The fixed line Pref shows a steady transmission constraint, and the sloping line Pramp shows the change in the transmission constraint indicating a decreasing grid capability to absorb the produced energy. The grid active power requirement steadily decreases over a ramp-down time t_rd. Whenever the renewable power plant produces more than the grid can momentarily absorb, indicated by the excess regions "X", this excess power X can be transferred to the power storage facilities 103, 104 of the power plant. Similarly, whenever the renewable power facilities fail to meet the committed power delivery, a deficit, indicted by the deficit region "D", can be made up or compensated by retrieving power stored in the power storage facilities. The diagram shows that energy can be transferred to a storage facility, for example when the wind increases to a level that results in energy being produced in excess of a momentary requirement, for example a momentary reduced grid requirement during a ramp down procedure. Similarly energy can be retrieved from a storage facility and fed into the grid when the wind decreases, so that the wind turbines cannot meet the momentary requirement, but the power plant as a whole can meet the requirement by using some of the stored energy. Energy is only spilled by a power production facility such as a wind power plant when its energy output is greater than the ability of the storage facilities to absorb excess power, i.e. the storage facilities are "full", and the power reference Pref, Pramp is already fulfilled by the power plant. Energy is spilled much more often in conventional renewable power plants, and in greater quantities, since these cannot "park" their surplus power in the convenient and efficient manner made possible by the power plant.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of controlling a power plant connected to an electricity grid, the power plant comprising power plant facilities including renewable power production facilities connected to power storage facilities, the method comprising:
determining an active power grid demand of the electricity grid;
obtaining operating data for the renewable power production facilities and for the power storage facilities;
determining, based upon the active power grid demand and the operating data, active power transfer quantities to be transferred between the renewable power production facilities and the power storage facilities and/or from a power plant facility to the electricity grid;
computing active power references for the renewable power production facilities and/or the power storage facilities based upon the active power transfer quantities; and
operating the renewable power production facilities and/or the power storage facilities based upon the active power references.

2. The method according to claim 1, wherein the operating data comprise an indication of a quantity of power stored in a power storage facility of the power plant and/or an indication of the power output by a renewable power production facility of the power plant.

3. The method according to claim 1, wherein an active power reference for a power storage facility is computed to transfer a quantity of stored power to the electricity grid when the power stored in the power storage facility is greater than an upper threshold.

4. The method according to claim 1, wherein the active power references are computed to transfer quantities of power to or from a power storage facility according to a power output of the power production facilities and a ramp limit.

5. The method according to claim 1, wherein an active power reference for a power storage facility is computed to transfer a quantity of stored power to the electricity grid when a grid active power demand is increased.

6. The method according to claim 1, wherein an active power reference for a power storage facility is computed to transfer a quantity of stored power to the electricity grid when a grid frequency is lower than a grid frequency requirement.

7. The method according to claim 1, wherein an active power reference for a power storage facility is computed to transfer active power from a renewable power production facility of the power plant to the power storage facility when the level of power stored in the power storage facility is less than a lower threshold.

8. The method according to claim 1, wherein, for a renewable power production facility committed to deliver spinning reserve as an ancillary service, active power references are computed for the facilities of the power plant to deliver full spinning reserve and to minimize energy spillage of the renewable power production facility.

9. The method according to claim 8, wherein, when the power stored in a power storage facility exceeds a certain level, the spinning reserve of a power production facility is reduced based upon a stored power level.

10. The method according to claim 1, wherein one or more quantities of active power are transferred to or from one or more power storage facilities of the power plant to compensate for a power change rate limitation imposed on a renewable power production facility of the power plant.

11. The method according to claim 1, wherein active power references are computed for the facilities of the power plant to smoothen an output of one or more renewable power production facilities and/or to smoothen an oscillating grid power.

12. The method according to claim 1, wherein, for a power plant committed to deliver inertial response as an ancillary service, active power references are computed such that the power transferred to the electricity grid comprises a first portion of active power retrieved from one or more of the storage facilities and a second portion of active power generated by one or more of the production facilities.

13. A plant controller for controlling a power plant connected to an electricity grid, the power plant comprising power plant facilities including renewable power production facilities connected to power storage facilities, the plant controller comprising:
input means for determining an active power grid demand of the electricity grid;
data collection means for obtaining operating data of the renewable power production facilities and of the power storage facilities;
a transfer quantity determination module for determining, based upon the active power grid demand and the operating data, active power transfer quantities to be transferred between the renewable power production facilities and the power storage facilities, and/or from the renewable power production facilities to the electricity grid;
a reference computation module
for computing active power references for the power plant facilities based upon the active power transfer quantities and
for distributing the references to the power plant facilities such that the power plant facilities operate to fulfill grid demands.

14. A power plant comprising at least one renewable power production facility connected to at least one power storage facility, wherein the power plant is connected to an electricity grid and comprises a plant controller according to claim 13 for controlling the power plant facilities using the method according to claim 1.

15. The power plant according to claim 14,
wherein a power production facility is selected from the group consisting of a wind power plant, a tidal power plant, a solar power plant, and a combination thereof, and
wherein a power storage facility is selected from the group consisting of a thermal storage facility, a battery storage facility, a flywheel storage facility, a compressed air storage facility, a synthetic natural gas storage facility, and a combination thereof.
